# EUROPÄISCHE PATENTSCHRIFT

(11) **EP 1 802 498 B1**
(45) Veröffentlichungstag und Bekanntmachung des Hinweises auf die Patenterteilung: **10.09.2008**
(21) Anmeldenummer: 05801642.9
(22) Anmeldetag: 14.10.2005
(51) Int. Cl.: B60T 7/04, B60T 8/40

(54) **BREMSSYSTEM VOM TYP BRAKE-BY-WIRE**
BRAKE-BY-WIRE TYPE BRAKE SYSTEM
SYSTEME DE FREINAGE DE TYPE "FREINAGE ELECTRONIQUE"

(30) Priorität: 15.10.2004 DE 102004050287; 14.10.2005 DE 102005049199
(43) Veröffentlichungstag der Anmeldung: 04.07.2007
(73) Patentinhaber: Continental Teves AG & Co. oHG, 60488 Frankfurt am Main (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); GONZALEZ, Jose, 32549 Bad Oeynhausen (DE); RITTER, Wolfgang, 61440 Oberursel/Ts. (DE)
(86) Internationale Anmeldenummer: PCT/EP2005/055275
(87) Internationale Veröffentlichungsnummer: WO 2006/042827

(56) Entgegenhaltungen:
- DE-A1- 19 632 035
- DE-A1- 19 750 977
- DE-A1- 19 914 450
- DE-C1- 19 543 698
- US-B1- 6 533 366

## Beschreibung

Die vorliegende Erfindung betrifft ein Bremssystem vom Typ "Brake-by-wire" für ein mit einem Antriebsmotor ausgestattetes (Kraft-) Fahrzeug, mit
a) einem mittels eines Betätigungspedals betätigbaren Bremsdruckgeber, der außerhalb der Betriebsart "Brake-by-wire" mit Radbremsen des Fahrzeuges verbindbar ist,
b) einer mittels einer elektronischen Steuereinheit (ECU) ansteuerbaren Druckquelle, die in der Betriebsart "Brake-by-wire" mit den Radbremsen des Fahrzeuges verbindbar ist,
c) Mitteln zum Erfassen eines Fahrerverzögerungs-wunsches,
d) einem mit dem Betätigungspedal zusammenwirkenden Pedalwegsimulator, durch den in der Betriebsart "Brake-by-wire" eine auf das Betätigungspedal wirkende Rückstellkraft unabhängig von der Ansteuerung der Druckquelle simulierbar ist und
e) einer mittels der elektronischen Steuereinheit ansteuerbaren elektrohydraulischen Einrichtung, die in der Betriebsart "Brake-by-wire" ein Zuschalten und außerhalb der Betriebsart "Brake-by-wire" ein Abschalten des Pedalwegsimulators ermöglicht,
wobei die Ansteuerung der elektrohydraulischen Einrichtung durch von den Mitteln zum Erfassen des
Fahrerverzögerungswunsches erzeugte Signale erfolgt.

Ein derartiges Bremssystem ist aus der DE 10 2004 011 622 A1 bekannt. Die elektrohydraulische Einrichtung zum Zuschalten sowie zum Abschalten des Pedalwegsimulators wird bei dem vorbekannten Bremssystem durch eine Zylinder-Kolben-Anordnung gebildet, deren Druckraum mittels eines Absperrventils absperrbar bzw. mit einer Druckkammer verbindbar ist, in der ein niedriger Druck herrscht. Dieser Veröffentlichung sind jedoch keine konkreten Hinweise auf die Ansteuerung des Absperrventils entnehmbar.

Aus der US 6,533,366 B1 ist ebenfalls ein derartiges Bremssystem bekannt. Als elektrohydraulische Einrichtung dient bei dem vorbekannten Bremssystem ein Ventil, das bei Fststellung einer Pedalbetätigung umgeschaltet wird, sodass der Hauptzylinder mit dem Simulator in Verbindung steht.

Es ist daher Aufgabe der vorliegenden Erfindung, eine verbesserte Gestaltung für diese elektrohydraulische einrichtung anzugeben, die eine kraftübertragende Verbindung zwischen der elektrohydraulischen Einrichtung und dem Pedalwesimulator ermöglicht.

Diese Aufgabe wird erfindungsgemäß durch die im kennzeichnenden Teil des unabhängigen Patentanspruchs 1 aufgeführten Merkmale gelöst. Durch die genannten Maßnahmen wird erreicht, dass dem Fahrer bereits bei der ersten Betätigung des Bremspedals das gewöhnliche Pedalgefühl vermittelt wird. Dabei wird die elektrohydraulische Einrichtung durch eine mittels eines elektromagnetisch betätigbaren Absperrventils absperrbare Zylinder-Kolbenanordnung gebildet, deren Kolben mit dem Pedalwegsimulator in kraftübertragender Verbindung steht.

Der Kolben begrenzt vorzugsweise einen hydraulischen Druckraum, der unter Zwischenschaltung des Absperrventils mit einer Niederdruckkammer verbunden ist. Das Absperrventil kann entweder als ein stromlos offenes (SO-) Ventil oder als ein in Schließrichtung vorgespanntes, stromlos offenes Ventil mit Druckbegrenzungsfunktion ausgeführt sein.

Weitere Merkmale und Vorteile der Erfindung werden in der nachfolgenden Beschreibung unter Bezugnahme auf die beiliegenden Zeichnungen an zwei Beispielen näher erläutert. In den Zeichnungen zeigen:
Fig. 1a die wesentlichen Teile einer ersten Ausführung des erfindungsgemäßen Bremssystems für Kraftfahrzeuge;
Fig. 1b eine vereinfachte schematische Darstellung der elektrohydraulischen Einrichtung des Bremssystems nach Fig. 1a in der Ruhestellung bzw. der Rückfallebene;
Fig. 1c eine vereinfachte schematische Darstellung der elektrohydraulischen Einrichtung des Bremssystems nach Fig. 1a in der Betriebsart "Brake-by-wire";

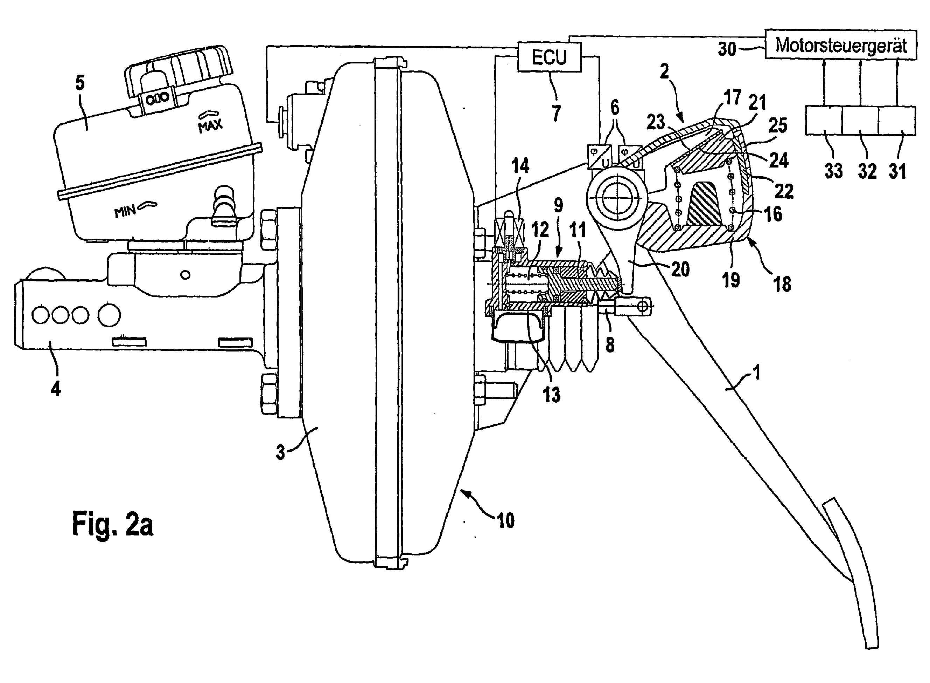

Fig. 2a die wesentlichen Teile einer zweiten Ausführung des erfindungsgemäßen Bremssystems für Kraftfahrzeuge;

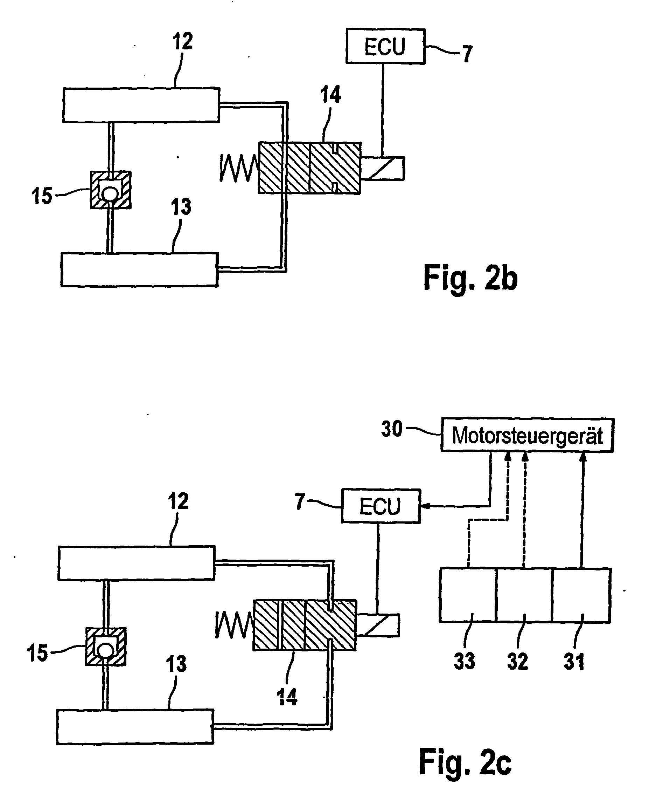

Fig. 2b eine vereinfachte schematische Darstellung der elektrohydraulischen Einrichtung des Bremssystems nach Fig. 2a in der Ruhestellung bzw. der Rückfallebene; und
Fig. 2c eine vereinfachte schematische Darstellung der elektrohydraulischen Einrichtung des Bremssystems nach Fig. 2a in der Betriebsart "Brake-by-wire".

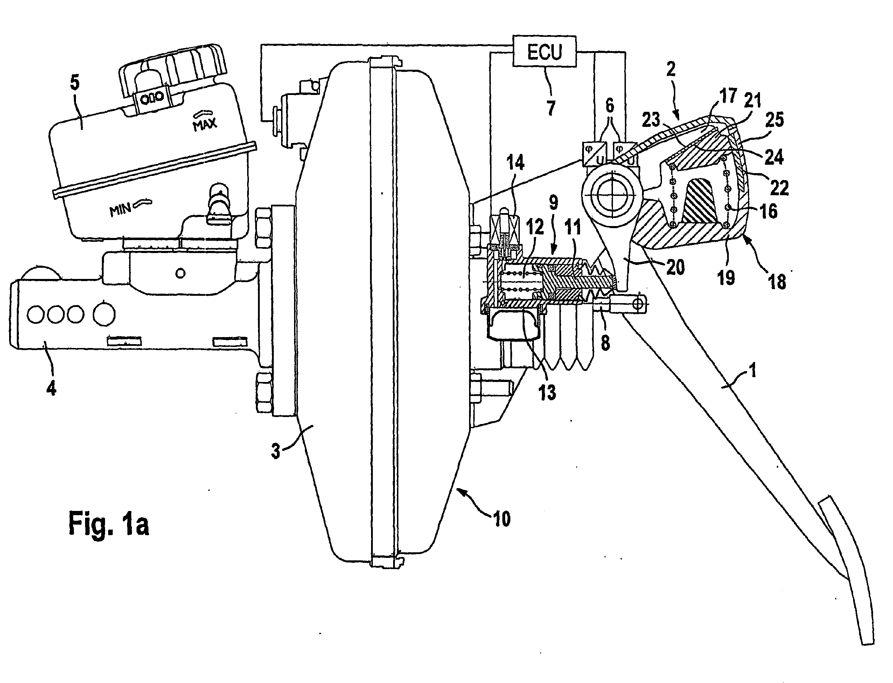

Die in Fig. 1a dargestellte erste Ausführung des erfindungsgemäßen Bremssystems eines Kraftfahrzeugs vom Typ "Brake-by-wire" besteht im Wesentlichen aus einer Bremsbetätigungseinheit 10, einem Bremspedal 1, einem Pedalwegsimulator 2, einer elektronischen Steuereinheit 7 sowie nicht gezeigten, ggf. unter Zwischenschaltung einer hydraulischen Steuer- bzw. Regeleinheit an die Bremsbetätigungseinheit 10 angeschlossenen Radbremsen. Die Bremsbetätigungseinheit 10 wird durch einen Bremskraftverstärker, vorzugsweise einen Unterdruckbremskraftverstärker 3, einen dem Bremskraftverstärker 3 nachgeschalteten Hauptbremszylinder, vorzugsweise einem Tandemhauptzylinder 4, an dessen nicht dargestellte Druckräume die vorhin erwähnten Radbremsen des Kraftfahrzeugs angeschlossen sind, sowie einen dem Hauptbremszylinder 4 zugeordneten Druckmittelvorratsbehälter 5 gebildet. Das Bremspedal 1, das der Betätigung des Bremskraftverstärkers 3 durch den Fahrer dient, wirkt insbesondere in der Betriebsart "Brake-by-wire" mit dem Pedalwegsimulator 2 zusammen, der dem Fahrer das gewöhnliche Bremspedalgefühl vermittelt. Eine vorzugsweise redundant ausgeführte Sensoreinrichtung 6 zur Erfassung eines Fahrerverzögerungswunsches erzeugt in Abhängigkeit von der Betätigung des Bremspedals 1 Steuersignale, die der elektronischen Steuereinheit 7 zugeführt werden, durch deren Ausgangssignale u. a. ein dem Bremskraftverstärker 3 zugeordneter, nicht dargestellter Elektromagnet ansteuerbar ist, der eine vom Fahrerwillen unabhängige Betätigung eines pneumatischen Steuerventils ermöglicht, das eine Luftzufuhr zum Bremskraftverstärker 3 steuert. Ein zwischen dem Ende einer mit dem Bremspedal 1 gekoppelten Kolbenstange 8 und einem Steuerkolben des vorhin genannten Steuerventils vorgesehener axialer Spalt gewährleistet in der Betriebsart "Brake-by-wire" eine Entkopplung der kraftübertragenden Verbindung zwischen dem Bremspedal 1 und dem Bremskraftverstärker 3.

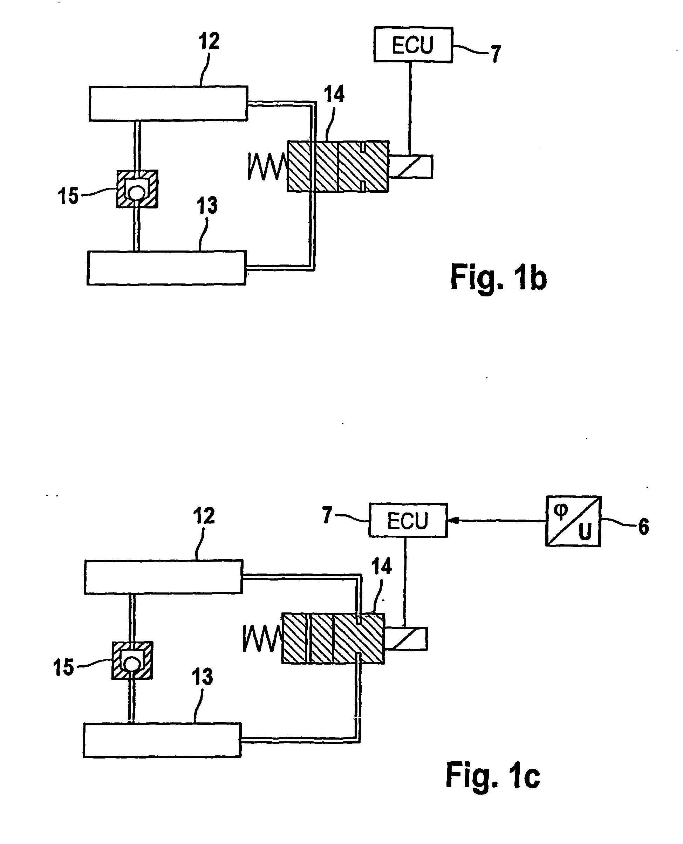

Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Das Zu- sowie das Abschalten des Pedalwegsimulators 2 erfolgt bei der gezeigten Ausführung durch elektrohydraulische Mittel, die im Wesentlichen durch eine mittels eines elektromagnetisch betätigbaren Absperrventils 14 absperrbare hydraulische Zylinder-Kolbenanordnung 9 gebildet sind. Die Zylinder-Kolbenanordnung 9 weist einen von einem Kolben 11 begrenzten hydraulischen Druckraum 12 sowie eine mit dem Druckraum 12 in Verbindung stehende hydraulische Niederdruckkammer 13 auf, wobei das Absperrventil 14, wie bereits erwähnt, das Absperren bzw. das Freigeben der Verbindung ermöglicht. Das Absperrventil 14, das mittels der Ansteuersignale der elektronischen Steuereinheit 7 betätigbar bzw. umschaltbar ist, ist als ein elektromagnetisch betätigbares, stromlos offenes (SO-) 2/2-Wegeventil (s. Fig. 1b,c) ausgebildet. Dem Druckausgleich zwischen Druckraum 12 und Niederdruckkammer 13 dient ein zum Druckraum 12 hin öffnendes Rückschlagventil 15 (s.
Fig. 1b).

Bei der in Fig. 1a dargestellten ersten vorteilhaften Ausführung weist der Pedalwegsimulator eine Druckfeder 16 auf, die zwischen dem Bremspedal 1 bzw. einem mit dem Bremspedal 1 drehfest verbundenen Kraftübertragungsteil 17 und einem zweiarmigen Hebel 18 eingespannt ist. Der zweiarmige Hebel 18 ist gegenüber dem Bremspedal 1 koaxial mit diesem versetzt begrenzt drehbar gelagert, wobei sein erster Arm 19 eine Abstützfläche für die Druckfeder 16 bildet, während sich sein zweiter Arm 20 am hydraulischen Kolben 11 der Kolben-Zylinderanordnung 9 abstützt.

An dem vorhin erwähnten Kraftübertragungsteil 17 liegt unter der Wirkung der Simulatorfeder 16 ein Reibglied 21 an. Das Reibglied 21 wirkt mit einer Reibfläche 22 zusammen. Die Anlage des Reibglieds 21 am Kraftübertragungsteil 17 erfolgt mittels schräg angeordneter Anlageflächen 23, 24 derart, dass bei der Betätigung des Pedalwegsimulators 2 eine Kraftkomponente entsteht, die das Reibglied 21 gegen die Reibfläche 22 drückt. Die vorhin genannten Elemente 16, 17, 21, 22 sind vorzugsweise in einem Gehäuse 25 angeordnet, das vorzugsweise einteilig mit dem ersten Arm 19 des zweiarmigen Hebels 18 ausgebildet ist.

Die Funktionsweise des oben beschriebenen Bremssystems ist dem auf dem technischen Gebiet von "Brake-by-wire"-Systemen tätigen Fachmann bekannt. In der in Fig. 1a dargestellten Ruhestellung des Bremssystems, die auch der Rückfallebene (s. auch Fig. 1b) entspricht, ist der hydraulische Druckraum 12 der elektrohydraulischen Einrichtung 9 über das stromlos offene Absperrventil 14 mit der Niederdruckkammer 13 verbunden. Bei der Betätigung des Bremspedals 1 wird seine Bewegung durch die Sensoreinrichtung 6 erfasst und der elektronischen Steuereinheit 7 gemeldet, die gleichzeitig Steuersignale zum Ansteuern des vorhin erwähnten Elektromagneten sowie des Absperrventils 14 erzeugt, so dass die Verbindung zwischen dem Druckraum 12 und der Niederdruckkammer 13 unterbrochen wird, wodurch der Pedalwegsimulator 2 zugeschaltet wird. Dieser Zustand ist in Fig. 1c schematisch dargestellt.

Bei einem Ausfall der Fahrzeugelektranik bzw. einem Bordnetzausfall kann das Absperrventil 14 nicht umgeschaltet werden, so dass die Bremsung in der Rückfallebene erfolgt. Bei der Betätigung des Bremspedals 1 dreht sich der zweiarmige Hebel 18 unter der Wirkung der Simulatorfeder 16 mit dem Bremspedal 1 mit, so dass der Kolben 11 der elektrohydraulischen Absperreinrichtung 9 in der Zeichnung nach links verschoben wird und das Druckmittel aus dem Druckraum 12 in die Niederdruckkammer 13 verschiebt.

Bei der in Fig. 1a - c dargestellten zweiten Ausführung des erfindungsgemäßen Bremssystems wirkt die elektronische Steuereinheit 7 mit einem Steuergerät 30 zusammen, das den nicht gezeigten Antriebsmotor des Fahrzeuges steuert. Dem Steuergerät 30 werden u. a. Signale eines Türkontaktes 31, eines Sitzbelegungserkennungsmittels 32 oder einer Fernbedienung 33 zum Entriegeln der Fahrertür zugeführt und zu einem Ansteuersignal verarbeitet, das (über die elektronische Steuereinheit 7) als Umschaltsignal für das vorhin erwähnte Absperrventil 14 dient. Da die Funktionsweise der beschriebenen Anordnung der Funktionsweise des im Zusammenhand mit Fig. 1a-c erläuterten Bremssystem entspricht, braucht sie nicht mehr erläutert zu werden.

Im Rahmen der vorliegenden Erfindung sind selbstverständlich Modifikationen denkbar. So kann beispielsweise anstelle des stromlos offenen Absperrventils 14 ein in Schließrichtung vorgespanntes, stromlos offenes Absperrventil mit Druckbegrenzungsfunktion verwendet werden.

## Patentansprüche

1. Bremssystem vom Typ "Brake-by-wire" für ein Kraftfahrzeug, mit
a) einem mittels eines Bremspedals (1) betätigbaren Bremsdruckgeber (3,4), der außerhalb der Betriebsart "Brake-by-wire" mit Radbremsen des Fahrzeuges verbindbar ist,
b) einer mittels einer elektronischen Steuereinheit (7) ansteuerbaren Druckquelle (3, 4,5); die in der Betriebsart "Brake-by-wire" mit den Radbremsen des Fahrzeuges verbindbar ist,
c) Mitteln (6) zum Erfassen eines Fahrerverzögerungswunsches,
d) einem mit dem Bremspedal (1) zusammenwirkenden Pedalwegsimulator (2), durch den in der Betriebsart "Brake-by-wire" eine auf das Bremspedal (1) wirkende Rückstellkraft unabhängig von der Ansteuerung der Druckquelle simulierbar ist und
e) einer mittels der elektronischen Steuereinheit (7) ansteuerbaren elektrohydraulischen Einrichtung (9), die in der Betriebsart "Brake-by-wire" ein Zuschalten und außerhalb der Betriebsart "Brake-by-wire" ein Abschalten des Pedalwegsimulators (2) ermöglicht,
wobei die Ansteuerung der elektrohydraulischen Einrichtung (9) durch von den Mitteln (6) zum Erfassen des Fahrerverzögerungswunsches erzeugte Signale erfolgt,
**dadurch gekennzeichnet, dass** die elektrohydraulische Einrichtung durch eine mittels eines elektromagnetisch betätigbaren Absperrventils (14) absperrbare Zylinder-Kolbenanordnung (9) gebildet wird, deren Kolben (11) mit dem Pedalwegsimulator (2) in kraftübertragender Verbindung steht.

2. Bremssystem nach Anspruch 1 **dadurch gekennzeichnet, dass** die Ansteuerung der elektrohydraulischen Einrichtung (9) aufgrund dem Steuergerät (30) zugeführter Signale einer Fahrzeugfernbedienung (33) erfolgt.

3. Bremssystem nach Anspruch 1 oder 2, **dadurch gekennzeichnet, dass** der Kolben (11) einen hydraulischen Druckraum (12) begrenzt, der unter Zwischenschaltung des Absperrventils (14) mit einer Niederdruckkammer (13) verbunden ist.

4. Bremssystem nach einem der vorhergehenden Ansprüche, **dadurch gekennzeichnet, dass** das Absperrventil (14) als ein stromlos offenes (SO-) Ventil ausgeführt ist.

5. Bremssystem nach einem der vorhergehenden Ansprüche, **dadurch gekennzeichnet, dass** das Absperrventil (14) als ein in Schließrichtung vorgespanntes, stromlos offenes Ventil mit Druckbegrenzungsfunktion ausgeführt ist.

## Claims

1. Brake system of the 'brake-by-wire' type for a motor vehicle, comprising
a) a brake pressure generator (3, 4) operable by means of a brake pedal (1), which can be connected to wheel brakes of the vehicle outside the 'brake-by-wire' operating mode,
b) a pressure source (3, 4, 5) that can be actuated by means of an electronic control unit (7) and can be connected to the wheel brakes of the vehicle in the 'brake-by-wire' operating mode,
d) a means (6) to detect a deceleration request of the driver,
e) a pedal travel simulator (2) which interacts with the brake pedal (1) and due to which a resetting force acting on the brake pedal (1) can be simulated in the 'brake-by-wire' operating mode independently of the actuation of the pressure source, and
f) an electrohydraulic device (9), which can be actuated by means of the electronic control unit (7) and enables connection of the pedal travel simulator in the 'brake-by-wire' operating mode and disconnection of the pedal travel simulator (2) outside the 'brake-by-wire' operating mode,
wherein the electrohydraulic device (9) is actuated by signals generated by the means (6) for detecting the driver's request of deceleration,
**characterized in that** the electrohydraulic device comprises a cylinder-and-piston assembly (9), which can be closed by means of an electromagnetically operable shut-off valve (14) and the piston (11) of which is in a force-transmitting connection with the pedal travel simulator (2).

2. Brake system as claimed in claim 1,
**characterized in that** the electrohydraulic device (9) is actuated by signals of a vehicle remote control (33) being sent to the controlling device (30).

3. Brake system as claimed in claim 1 or 2,
**characterized in that** the piston (11) delimits a hydraulic pressure chamber (12), which is connected to a low-pressure chamber (13) by the intermediary of the shut-of valve (14).

4. Brake system as claimed in any one of the preceding claims,
**characterized in that** the shut-off valve (14) is designed as a normally open (NO) valve.

5. Brake system as claimed in any one of the preceding claims,
**characterized in that** the shut-off valve (14) is designed as a normally open valve with a pressure-limiting function that is biased in the closing direction.

## Revendications

1. Système de freinage du type "brake-by-wire" pour un véhicule automobile, comportant
a) un transmetteur de pression de freinage (3, 4) à actionner au moyen d'une pédale de frein (1), qui peut être relié, en dehors du mode de fonctionnement "brake-by-wire", à des freins de roue du véhicule,
b) une source de pression (3, 4, 5) à commander au moyen d'une unité de commande électronique (7) qui, en mode de fonctionnement "brake-by-wire", peut être reliée aux freins de roue du véhicule,
c) des moyens (6) pour détecter une volonté de ralentissement du conducteur,
d) un simulateur de course de pédale (2) coopérant avec la pédale de frein (1), par lequel, en mode de fonctionnement "brake-by-wire", une force de rappel agissant sur la pédale de frein (1) peut être simulée indépendamment de la commande de la source de pression, et
e) un dispositif électrohydraulique (9), à commander au moyen de l'unité de commande électronique (7), qui, en mode de fonctionnement "brake-by-wire", permet une activation du simulateur de course de pédale (2) et, en dehors du mode de fonctionnement "brake-by-wire", permet une désactivation du simulateur de course de pédale (2),
la commande du dispositif électrohydraulique (9) étant effectuée par des signaux produits par les moyens (6) de détection de la volonté de ralentissement du conducteur,
**caractérisé en ce que** le dispositif électrohydraulique est formé par un ensemble cylindre-piston (9) qui peut être fermé au moyen d'une soupape d'arrêt (14) à actionnement électromagnétique, dont le piston (11) est en liaison de transmission des forces avec le simulateur de course de pédale (2).

2. Système de freinage selon la revendication 1, **caractérisé en ce que** la commande du dispositif électrohydraulique (9) s'effectue sur la base de signaux amenés à l'appareil de commande (30) d'une télécommande de véhicule (33).

3. Système de freinage selon l'une quelconque des revendications 1 ou 2, **caractérisé en ce que** le piston (11) délimite une chambre sous pression hydraulique (12) qui est reliée à une chambre basse pression (13), avec interposition de la soupape d'arrêt (14).

4. Système de freinage selon l'une quelconque des revendications précédentes, **caractérisé en ce que** la soupape d'arrêt (14) est réalisée sous la forme d'une soupape (SO) ouverte lorsqu'elle n'est pas parcourue par un courant.

5. Système de freinage selon l'une quelconque des revendications précédentes, **caractérisé en ce que** la soupape d'arrêt (14) est réalisée sous la forme d'une soupape ouverte lorsqu'elle n'est pas parcourue par un courant, précontrainte dans le sens de la fermeture, avec fonction de limitation de la pression.
